# EUROPÄISCHE PATENTANMELDUNG

(11) **EP 2 149 447 A1**
(43) Veröffentlichungstag der Anmeldung: **03.02.2010**
(21) Anmeldenummer: 08405189.5
(22) Anmeldetag: 29.07.2008
(51) Int. Cl.: B29C 59/04, B29C 43/22, B29C 43/28

(54) **Verfahren zur Herstellung einer Materialbahn mit Oberflächenstruktur**

(71) Anmelder: Alcan Technology & Management Ltd., 8212 Neuhausen am Rheinfall (CH)
(72) Erfinder: Wolters, Detlef, 79379 Müllheim (DE)

(57) **Zusammenfassung**

Bei einem Verfahren zur Herstellung einer Materialbahn mit wenigstens einer Materialschicht aus Kunststoff (13) mit einer eine Oberflächenstruktur mit Strukturerhebungen (26') und Strukturtälern (24') aufweisenden Oberfläche, wird der Kunststoff (13) als Kunststoffbahn (12) extrudiert und mittels einer Kühlwalze (16) abgekühlt und verfestigt, wobei die Oberflächenstruktur der Materialschicht aus Kunststoff (13) durch eine der Oberflächenstruktur entsprechende negative Oberflächenstruktur der Walzenoberfläche (22) der Kühlwalze (16) mit Strukturerhebungen (24) und Strukturtälern (26) während der Abkühlung und Verfestigung des Kunststoffes (13) auf die Kunststoffbahn (12) übertragen wird.

## Beschreibung

Die Erfindung betrifft ein Verfahren zur Herstellung einer Materialbahn mit wenigstens einer Materialschicht aus Kunststoff mit einer eine Oberflächenstruktur mit Strukturerhebungen und Strukturtälern aufweisenden Oberfläche. Im Speziellen betrifft die Erfindung ein Verfahren zur Herstellung eines Deckelmaterials mit einer Siegelschicht mit einer eine Oberflächenstruktur mit Strukturerhebungen und Strukturtälern aufweisenden Oberfläche sowie aus dem Deckelmaterial hergestellte Deckel aus einem Trägermaterial mit einer, bezogen auf einen Behälter, an dem der Deckel angewendet wird, nach innen weisenden Siegelschicht zum Verschliessen des Behälters, wobei die Oberfläche der nach innen weisende Siegelschicht eine Oberflächenstruktur mit Strukturerhebungen und Strukturtälern aufweist.

Es ist bekannt, Behälter, wie beispielsweise tiefgezogene, spritzgegossene oder anderweitig geformte Behälter, an deren Öffnung mit einer ebenen ringförmigen Schulter zu versehen und solche Behälter, insbesondere nach dem Befüllen, zu bedeckeln, wobei der Deckel vollflächig auf der Schulter aufliegt und beispielsweise durch Siegeln oder Kleben an der Schulter peeibar und dichtend befestigt wird. Solche Behälter, Schalen, Menuschalen, beispielsweise mit einem oder mehreren Fächern, Becher, Kleinverpackungen usw. sind beispielsweise bekannt zum Verpacken von Nahrungsmitteln aller Art, wie z.B. Milchprodukte, insbesondere Joghurt, Schlagsahne, Sauermilch, Sauerrahm, Kaffeesahne, Fertigzubereitungen von Salaten oder Halb- oder Vollkonserven, vorgekochten oder anderweitig vorbereiteten Gerichten, Getränke, wie Fruchtund Gemüsesäfte oder Trinkwasser.

Die Deckel werden beispielsweise aus einer endlos vorliegenden Deckelmaterialbahn ausgestanzt und gestapelt. Die Deckelstapel werden einer Verpackungsmaschine zugeführt und die vereinzelten oder entstapelten Deckel fortlaufend auf die bereits befüllten Behälter aufgesiegelt. Die mit einer Siegelschicht versehenen Deckel werden mittels eines Siegelwerkzeuges im Schulterbereich des Behälters auf den Behälterrand aufgesiegelt. Das Vereinzeln oder Entstapeln der Deckel durch Entnahme der Deckel vom Deckelstapel wird von den Verpackungsmaschinen nicht immer zuverlässig durchgeführt, da die aneinander liegenden Deckel unerwünscht gegenseitig aneinander haften können. Beispielsweise durch eine Prägung des Deckelmaterials lässt sich der Effekt des Aneinanderhaftens verhindern. Prägungen am Deckelmaterial wirken sich jedoch negativ auf das Druckbild auf der Aussenseite der Deckel aus.

Das Deckelmaterial kann, je nach den gestellten Anforderungen, aus verschiedensten Materialien bestehen. Typische Beispiele sind Metallfolien, insbesondere Aluminiumfolien, die ein- oder beidseitig mit Kunststoff beschichtet sind. Andere Deckelmaterialien enthalten Kunststoffe oder bestehen aus Kunststoffen in Form von Monofolien oder mehrschichtigen Laminaten. Weitere Deckelmaterialien können aus cellulosehaltigen Materialien, wie Zellglas oder Papier sein. Eingesetzt werden auch Laminate aus Metall- und Kunststofffolien. Um das Deckelmaterial mit dem Behälterrand zu versiegeln, wird das Deckelmaterial vollflächig mit einer Siegelschicht, wie einem Siegellack oder einer Siegelfolie versehen, wobei die Siegelschicht beispielsweise wenigstens auf der, an der fertigen Verpackung nach innen weisenden Seite, d.h. gegen den Behälterinnenraum weisend, angebracht ist.

Das Deckelmaterial dient im Weiteren als Informations- und Werbeträger. Aus diesem Grunde wird das Deckelmaterial auf seiner Aussenseite mit einem Druck versehen. Die Bedruckung kann auf der obersten, an einem fertigen Behälter nach aussen weisenden Schicht als sog. Schöndruck, angeordnet sein. Die Bedruckung kann auch mit einem Schutzlack oder mit einer Schutzfolie abgedeckt sein, oder die oberste Schicht des Deckelmaterials kann aus transparentem Material bestehen und auf der Rückseite als sog. Konterdruck bedruckt sein. Die Druckbilder können ein- oder mehrfarbig sein und in einer Druckmaschine aufgebracht werden.

Das Deckelmaterial wird beispielsweise derart hergestellt, dass ein Träger, wie eine Metallfolie, eine Kunststofffolie oder ein Kunststofffolienverbund durch Kaschieren oder Kalandrieren mit einer oder mehreren weiteren Schichten zu einem Mehrschichtverbund verarbeitet wird. Auf der am fertigen Behälter nach innen weisenden Seite des Deckelmaterials wird durch Lackieren oder Kaschieren die Siegelschicht aufgebracht. Nach diesen Verarbeitungsschritten wird das beispielsweise als Rollenware vorliegende Deckelmaterial durch eine Druckmaschine geleitet. Auf der später am Behälter nach aussen weisenden Seite des Deckelmaterials kann somit noch eine Bedruckung angebracht werden. Im Weiteren ist in ein Prägeschritt vorzusehen, der dem Deckelmaterial beispielsweise eine Würmchenprägung verleiht.

Aus WO-A-98/026931 ist ein Deckelmaterial mit einem Trägermaterial und mit einer oberflächenrauen, an der dem Packungsgut zugewandten Seite siegelfähigen Beschichtung als oberflächenrauer Aufdruck in Form von geometrisch angeordneten Abstandshaltern bekannt.

Aus EP-A-0 983 947 ist ein Deckel aus einem Trägermaterial bekannt, wobei die nach innen weisende Seite des Trägermaterials eine Siegelschicht in Form eines der Schulter des Behälters entsprechenden Druckbildes aufweist. Innerhalb des von der Siegelschicht begrenzten Bereiches ist ein Druckmuster aus einem Siegellack oder einem polymerhaltigen Lack auf das Trägermaterial gedruckt.

Mit der oberflächenrauen Beschichtung und mit dem Druckmuster lassen sich gestapelte Deckel ohne Aufbringen einer Prägung aus einem Stapel vereinzeln. Beide Verfahren erfordern jedoch zum Bedrucken des Trägermaterials mit einem Siegellack einen zusätzlichen Arbeitsschritt.

Der Erfindung liegt die Aufgabe zugrunde, ein Verfahren der eingangs genannten Art zu schaffen, mit welchem auf einfache Weise ohne Prägeschritt und ohne Aufdrucken eines Druckmusters die Oberfläche einer Kunststoffschicht mit einem Rauheitsmuster ausgestattet werden kann.

Ein weiteres Ziel der Erfindung ist die Herstellung eines Deckelmaterials zur Fertigung von Deckeln mit einer Siegelschicht, die problemlos aus einem Stapel vereinzelt werden können, sowie die Herstellung derartiger Deckel.

Zur erfindungsgemässen Lösung der Aufgabe führt, dass der Kunststoff als Kunststoffbahn extrudiert und mittels einer Kühlwalze abgekühlt und verfestigt wird, wobei die Oberflächenstruktur der Materialschicht aus Kunststoff durch eine der Oberflächenstruktur entsprechende negative Oberflächenstruktur der Walzenoberfläche der Kühlwalze mit Strukturerhebungen und Strukturtälern während der Abkühlung und Verfestigung des Kunststoffes auf die Kunststoffbahn übertragen wird.

Bevorzugt wird ein Trägermaterial mit dem Kunststoff extrusionsbeschichtet und der auf dem Trägermaterial angeordnete Kunststoff mittels der Kühlwalze abgekühlt und verfestigt.

Die Materialschicht aus Kunststoff wird bevorzugt mittels einer Andruckwalze gegen die Walzenoberfläche der Kühlwalze gepresst, wobei die Andruckwalze eine bevorzugte Shore A-Härte von beispielsweise 60 bis 80 aufweist.

Die Walzenoberfläche der Kühlwalze ist bevorzugt aufgeraut und weist eine mittlere Rautiefe R_{z} von 10 bis 40 µm, insbesondere 20 bis 30 µm, auf.

Die Rauhigkeitsspitzen der aufgeraute Walzenoberfläche der Kühlwalze können zur Vermeidung einer Verformung oder eines Durchstechens des Trägermaterials z. B. durch einen Schleifvorgang zumindest teilweise abgetragen sein.

Die aufgeraute Walzenoberfläche der Kühlwalze kann zur Erhöhung der Abriebfestigkeit hartverchromt sein.

Bei einer anderen Ausführungsform des erfindungsgemässen Verfahrens ist die Walzenoberfläche der Kühlwalze mit der Oberflächenstruktur von einer galvanisch abgeschiedenen Hartchromschicht gebildet.

Der Mittenabstand benachbarter Strukturerhebungen entspricht beispielsweise dem 0,5- bis 15-fachen Betrag des Durchmessers der Strukturerhebungen.

Die Anordnung der Strukturerhebungen der Oberflächenstruktur entspricht bevorzugt einer im wesentlichen gleichmässigen Zufallsverteilung.

Bei einer bevorzugten Anwendung ist das Trägermaterial eine Aluminiumfolie und die Kunststoffschicht eine peelbare Siegelschicht, und aus der Materialbahn werden Deckel zum Verschliessen von Behältern durch Siegelung hergestellt.

Das Trägermaterial kann eine Monofolie aus Kunststoff oder ein Mehrschichtverbund aus zwei oder mehreren Kunststoffschichten oder eine Metallfolie oder ein Mehrschichtverbund aus wenigstens einer Metallfolie oder und wenigstens einer Kunststofffolie sein. Das Trägermaterial kann auch aus cellulosehaltigem Material bestehen oder cellulosehaltiges Material enthalten. Das cellulosehaltige Material kann ein- oder beidseitig beispielsweise mit Kunststoff beschichtet sein oder kann metallisiert sein oder kann einseitig eine Kunststoffschicht und auf der anderen Seite eine metallisierte Schicht aufweisen. Die Kunststoffe des Trägermaterials können beispielsweise ein Polyolefin, wie Polyethylen (PE) oder Polypropylen (PP), Polyamid (PA), Polyethylenterephthalat (PET) oder Polyvinylchlorid (PVC) sein. Als Metallfolien könne beispielsweise Stahl- oder Aluminiumfolien angewendet werden. Als cellulosehaltige Materialien können beispielsweise Papiere oder Halbkarton zur Anwendung gelangen. Weitere Trägermaterialien sind z. B. Zellgläser. Das Trägermaterial kann eine Dicke von beispielsweise 12 - 500 µm aufweisen, wobei die Trägermaterialien aus Kunststofffolien oder aus Metallfolien oder aus Metall- und Kunststofffolien bevorzugt eine Dicke von 12 - 150 µm aufweisen, während Deckelmaterialien enthaltend cellulosehaltige Materialien beispielsweise eine Dicke von 40 - 500 µm aufweisen. Die Trägermaterialien sind insbesondere derart flexibel, dass sie zu Rollenware (Coils) gewickelt werden können.

Bevorzugte Trägermaterialien enthalten eine transparente, opake oder lichtundurchlässige Folie oder einen Folienverbund, aus wenigstens einem Kunststoff der Reihe der Polyester, der Polyolefine, wie Polyethylen oder Polypropylen, Polyamid oder aus Zellglas oder aus einer Metallfolie oder einer mit Kunststoff beschichteten Metallfolie oder ein Schichtstoff aus Papier mit einer Kunststoffschicht, wie z.B. einer PET-Schicht, die ihrerseits metallisiert sein kann.

Das Trägermaterial kann auch eine Sperrschicht gegen Gase, Dämpfe und Feuchtigkeit aufweisen. Sperrschichten können -- neben den genannten Metallfolien -- beispielsweise Folien aus Kunststoffen, wie Polyvinylidenchlorid (PVDC) oder Ethyl-Vinyl-Alkohol (EVOH), sein oder es kann eine Schicht aus keramischen Materialien, wie den Oxiden oder Nitriden des Siliziums oder Aluminiums, sein, die in dünner Schicht, z.B. im Bereich von 10 bis 500 nm, in einem Vakuumdünnschichtverfahren auf eine Trägerfolie abgeschieden worden sind. Beispiele weiterer Sperrschichten sind metallische Schichten, z.B. aus Aluminium, die durch Sputtern auf dem Träger abgeschleden werden.

Auf der -- an dem späteren fertigen Behälter -- nach aussen weisenden Seite des Deckels kann eine Bedruckung angeordnet sein. Das Bedrucken des Trägermaterials kann mit allen bekannten Druckverfahren vorgenommen werden, so z.B. Buch-, Offset-, Flexo-, Sieb-, Helio- und Kupfertiefdruck. Die Wahl, welches Druckverfahren zur Anwendung kommt hängt von der gewünschten Druckqualität, von den jeweiligen technischen Gegebenheiten und der Auflagenhöhe ab. Bevorzugt ist der Flexodruck (auch Anilin- oder Gummidruck genannt), das UV Flexoverfahren und der Tiefdruck, wie Kupfertiefdruck, oder der Heliodruck. Die Bedruckung auf der Aussenseite des Trägermaterials kann beispielsweise zusätzlich mittels eines Schutzlackes überlackiert sein oder mittels eines Kaschierhilfsmittels oder eines Klebstoffes kann weiterhin ein transparenter Film, beispielsweise aus Polyethylenterephthalat, Polyamid, Polyolefinen, wie Polyethylen oder Polypropylen oder einer Zellglasschicht, der dann jedoch im allgemeinen zur Verbesserung des Schutzes des Druckbildes im Konterdruck bedruckt wird, auf das Trägermaterial aufkaschiert werden.

Die Siegelschicht kann aus Polymeren bestehen. Geeignete Polymere sind Polyolefine, Vinylpolymere, Acrylpolymere, deren Copolymere oder Mischungen daraus. Auf dem Trägermaterial kann ein Haftvermittler oder Primer als Haftgrund für die Extrusionsbeschichtung des Trägermaterials mit der Siegelschicht aufgebracht sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Anordnung zur Durchführung des erfindungsgemässen Verfahrens;
- Fig. 2a: einen aufgeraute Oberfläche einer Kühlwalze als Schnitt senkrecht zur Walzenoberfläche;
- Fig. 2b: die aufgeraute Oberfläche von Fig. 2a nach leichtem Überschleifen;
- Fig. 3: einen Querschnitt durch die Anordnung von Fig. 1 nach der Linie I-I in vergrösserter Darstellung;
- Fig. 4: einen Querschnitt durch das mit der Anordnung von Fig. 1 hergestellte extrusionsbeschichtete Trägermaterial nach der Linie II-II in vergrösserter Darstellung;
- Fig. 5: die Draufsicht auf einen Deckel;
- Fig. 6: einen Schnitt durch einen Stapel von Deckeln gemäss Fig. 5 nach der Linie III-III.

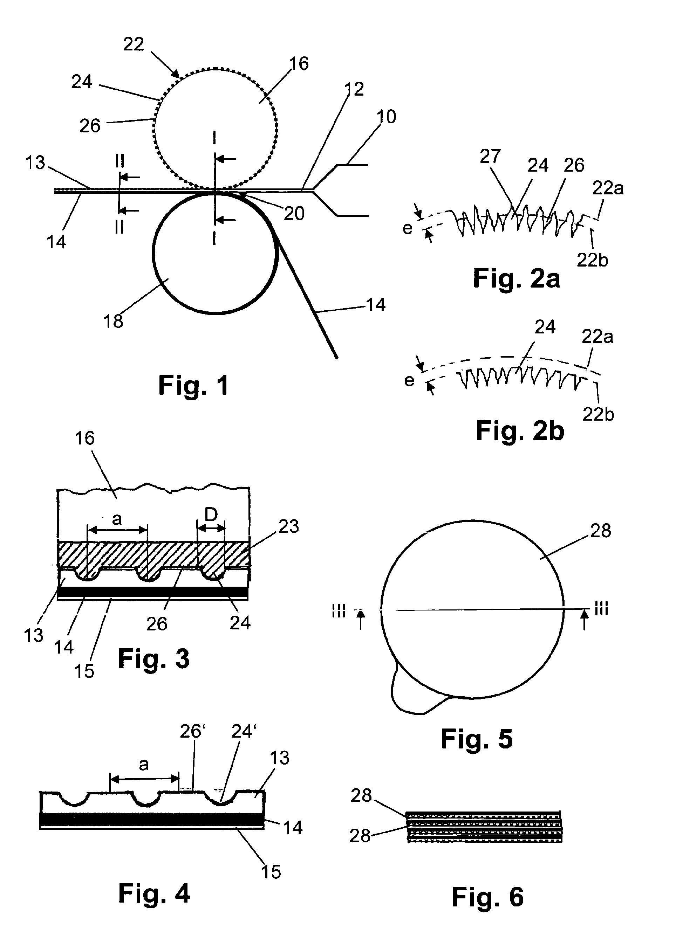

Ein in Fig. 1 gezeigte Anordnung zur Herstellung einer Materialbahn mit einer Materialschicht aus Kunststoff mit einer eine Oberflächenstruktur mit Strukturerhebungen und Strukturtälern aufweisenden Oberfläche umfasst eine in der Zeichnung nicht dargestellte Extrusionsanlage. Der Kunststoff verlässt die Extrusionsanlage durch eine Schlitzdüse 10 als schmelzflüssige Kunststoffbahn 12 und wird in Form einer Beschichtung auf ein bahnförmiges Trägermaterial 14 aufgegeben. Das mit dem schmelzflüssigen Kunststoff 13 extrusionsbeschichtete Trägermaterial 14 läuft zur Abkühlung und Verfestigung über eine Kühlwalze 16. Über eine achsparallel zur Kühlwalze 16 angeordnete Andruckwalze 18 kann der Walzenspalt 20 zwischen Kühlwalze 16 und Andruckwalze 18 sowie der Anpressdruck der Kunststoffbahn 12 gegen die Walzenoberfläche 22 der Kühlwalze 16 eingestellt werden.

Wie in Fig. 2a gezeigt, weist die Walzenoberfläche 22 der Kühlwalze 16 eine Oberflächenstruktur mit Strukturerhebungen 24 und Strukturtälern 26 auf. Einige der gebildeten Strukturerhebungen 26 erstrecken sich sowohl nach mechemischem als auch elektrochemischem Aufrauen bis an die ursprüngliche Oberfläche 22a der üblicherweise aus Stahl gefertigten Kühlwalze 20 und enden dort als scharfe Rauhigkeitsspitzen 27. Um das Eindringen dieser Rauhigkeitsspitzen 27 in das Trägermaterial 14 oder gar das Durchstechen des Trägermaterials 14 zu vermeiden, können die Rauhigkeitsspitzen 27 gemäss Fig. 2b durch leichtes Überschleifen der aufgerauten Oberfläche 22a der Kühlwalze 20 um ein Mass e von wenigen µm, z.B. um 3-10 µm, abgetragen werden.

Beim Durchlauf des mit dem schmelzflüssigen Kunststoff 13 extrusionsbeschichteten Trägermaterials 14 durch den Walzenspalt 20 werden die Strukturerhebungen 24 durch den Anpressdruck der Andruckwalze 18 in die sich verfestigende Kunststoffschicht eingepresst, und gleichzeitig füllt der ausweichende Kunststoff die Strukturtäler 26, so dass sich an der Oberfläche der Kunststoffschicht ein negatives Abbild der Oberflächenstruktur der Kühlwalzenoberfläche 22 mit Strukturtälern 24' und Strukturerhebungen 26' einstellt und nach Abkühlung und Verfestigung der Kunststoffschicht 13 fixiert bleibt (Fig. 3 und 4). Das in den Fig. 3 und 4 gezeigte Trägermaterial 14 ist auf der nicht extrusionsbeschichteten Seite mit einer gegebenenfalls bereits bedruckten oder später noch zu bedruckenden Grundlackschicht 15 versehen.

Die gewünschte Oberflächenstruktur der Kühlwalzenoberfläche 22 kann durch mechanische oder elektrolytische (galvanische) Verfahren erreicht werden.

Verfahren zur Herstellung galvanisch erzeugter Hartchromschichten mit unterschiedlich strukturierter Oberfläche sind dem Fachmann beispielsweise aus der DE-A- 42 11 881, der DE-A-198 28 545, der DE-A-195 15 394 und der EP-A-0 722 515 bekannt.

Die Walzenoberfläche 22 der beispielsweise aus Stahl gefertigte Kühlwalze 16 ist gemäss Fig. 3 als strukturierte Oberfläche einer galvanisch erzeugten Hartchromschicht 23 mit einer Vielzahl von Strukturerhebungen 24 und Strukturtälern 26 ausgebildet. Die Dicke der Hartchromschicht 23 beträgt beispleisweise 50 µm. Die mittlere Rautiefe R_{Z} der strukturierten Hartchromschicht 23, d.h., die mittlere Höhe der Strukturerhebungen 24 über den Strukturtälern 26, liegt beispielsweise bei etwa 28 µm. Die Verteilung der Strukturerhebungen 24 auf der Oberfläche der Hartchromschicht 23 entspricht einer annähernd gleichmässigen Zufallsverteilung. Der Mittenabstand a zwischen benachbarten Strukturerhebungen 24 entspricht beispielsweise dem 2,5 fachen Durchmesser D der Strukturerhebungen 24.

Die Andruckwalze 18 besteht beispielsweise aus einem Gummimaterial mit einer Shore A-Härte von z.B. 65. Der Anpressdruck der Andruckwalze 18 gegen die Kühlwalze 16 wird so eingestellt, dass sich an der Oberfläche der Kunststoffschicht 13 eine gut ausgebildete Oberflächenstruktur ergibt, ohne dass durch das Einpressen der Strukturerhebungen 24 in die Kunststoffschicht die darunter liegende Trägerschicht 14 ebenfalls verformt wird und sich an der Oberfläche der Trägerschicht 14 ein Prägemuster ausbilden kann. Gegebenenfalls kann es auch angezeigt sein, die Strukturerhebungen 24 der Oberflächenstruktur an der Kühlwalzenoberfläche 22 z.B. durch Überschleifen der aufgerauten Walzenoberfläche 22 teilweise abzutragen.

Zur Herstellung von Deckelmaterial als sog. Deckelfolie zum Verschliessen von Bechern und dgl. Behältern mit einer peelbaren Deckelmembrane wird als Trägermaterial 14 beispielsweise eine ¼ harte Aluminiumfolie eingesetzt, da diese wegen der im Vergleich zu weichem Aluminium höheren Steifigkeit die Entstapelung unterstützt. Die Aluminiumfolie kann dabei auf der späteren Deckelaussenseite bereits eine Lackierung 15 für eine Bedruckung aufweisen. Die durch Extrusionsbeschichten auf das Trägermaterial 14 aufgetragene, am späteren Deckel die peelbare Siegelschicht bildende Kunststoffschicht 13 kann z.B. ein Kunststoff auf der Basis von Polyethylen oder Ethylenacrylat sein.

Geeignete peelbare Siegelschichten bestehen z.B. aus Polyethylen oder einem Plastomer mit einem Füllstoff wie Calciumcarbonat oder Talkum. Weiter geeignete peelbare Slegelmedlen sind die Peelgranulate von DuPont, bekannt unter dem Handelsnamen Appeel. Die Extrusionsbeschichtung der lackierten Aluminiumfolie erfolgte in einer Auftragsstärke von beispielsweise 17 - 30 g/m². Es wurden Versuche mit Kühlwalzen 16 durchgeführt, deren aufgeraute Walzenoberfläche 22 eine mittlere Rautiefe R_{Z} von 20, 23 und 28 µm aufwiesen. In allen Fällen ergab sich ein exaktes Abbild der Oberflächenstruktur der Kühlwalzenoberfläche 22 auf der Oberfläche der durch Extrusionsbeschichten auf die Aluminiumfolie aufgetragenen Siegelschichten.

Fig. 5 zeigt ein Beispiel eines aus dem vorstehen beschriebenen, mit Kunststoff 13 extrusionsbeschichteten Trägermaterial 14 hergestellten Deckels 28. Der Deckel 28 weist als Trägermaterial 14 eine auf der Aussen- oder Bedruckseite mit einer Lackschicht 15 versehene Aluminiumfolie auf. Die als Siegelschicht dienende Kunststoffschicht 13 ist mit der der vorstehend beschriebenen Oberflächenstruktur mit Strukturerhebungen 26' und Strukturtälern 24' versehen. In einem Bereich seines Umfangs ist der Deckel 28 mit einer Aufreisslasche zum Peelen des auf einen Behälterrand gesiegelten Deckels und damit zum Öffnen des Behälters versehen.

Werden derartig ausgebildete Deckel 28, wie in Fig. 6 gezeigt, gestapelt, so liegen im Stapel die Siegelschichten mit der Oberflächenstruktur einer glatten, bedruckten und gegebenenfalls überlackierten Deckelaussenseite an. Die Strukturerhebungen 26' der Oberflächenstruktur ermöglichen einen seitliche Lufteintritt zwischen die Deckel 28, verhindern damit das Auftreten des sog. Glasplatteneffekts und ein gegenseitiges Haften benachbarter Deckel 28 wird wirksam unterbunden. Die gestapelten Deckel 28 ermöglichen ein problemloses Vereinzeln. Damit werden ungeprägte, gestapelte Deckel in Verpackungsmaschinen zuverlässig maschinengängig.

## Patentansprüche

1. Verfahren zur Herstellung einer Materialbahn mit wenigstens einer Materialschicht aus Kunststoff (13) mit einer eine Oberflächenstruktur mit Strukturerhebungen (26') und Strukturtälern (24') aufweisenden Oberfläche,
**dadurch gekennzeichnet, dass**
der Kunststoff (13) als Kunststoffbahn (12) extrudiert und mittels einer Kühlwalze (16) abgekühlt und verfestigt wird, wobei die Oberflächenstruktur der Materialschicht aus Kunststoff (13) durch eine der Oberflächenstruktur entsprechende negative Oberflächenstruktur der Walzenoberfläche (22) der Kühlwalze (16) mit Strukturerhebungen (24) und Strukturtälern (26) während der Abkühlung und Verfestigung des Kunststoffes (13) auf die Kunststoffbahn (12) übertragen wird.

2. Verfahren nach Anspruch 1, **dadurch gekennzeichnet, dass** ein Trägermaterial (14) mit dem Kunststoff (13) extrusionsbeschichtet und der auf dem Trägermaterial (14) angeordnete Kunststoff (13) mittels der Kühlwalze (16) abgekühlt und verfestigt wird.

3. Verfahren nach Anspruch 1 oder 2, **dadurch gekennzeichnet, dass** die Materialschicht aus Kunststoff (13) mittels einer Andruckwalze (18) gegen die Walzenoberfläche (22) der Kühlwalze (16) gepresst wird.

4. Verfahren nach Anspruch 3, **dadurch gekennzeichnet, dass** die Andruckwalze (18) eine Shore A-Härte von 60 bis 80 aufweist.

5. Verfahren nach einem der Ansprüche 1 bis 4, **dadurch gekennzeichnet, dass** die Walzenoberfläche (22) der Kühlwalze (16) aufgeraut ist und eine mittlere Rautiefe (R_{z}) von 10 bis 40 µm, insbesondere 20 bis 30 µm, aufweist.

6. Verfahren nach Anspruch 5, **dadurch gekennzeichnet, dass** Rauhigkeitsspitzen (27) der aufgeraute Walzenoberfläche (22) der Kühlwalze (16) zur Vermeidung einer Verformung oder eines Durchstechens des Trägermaterials (14) zumindest teilweise abgetragen sind.

7. Verfahren nach Anspruch 5 oder 6, **dadurch gekennzeichnet, dass** die aufgeraute Walzenoberfläche (22) der Kühlwalze (16) hartverchromt ist.

8. Verfahren nach Anspruch 5 oder 6, **dadurch gekennzeichnet, dass** die Walzenoberfläche (22) der Kühlwalze (16) von einer galvanisch abgeschiedenen Hartchromschicht (23) gebildet ist.

9. Verfahren nach einem der Ansprüche 1 bis 8, **dadurch gekennzeichnet, dass** der Mittenabstand (a) benachbarter Strukturerhebungen (24) dem 0,5-bis 15-fachen Betrag des Durchmessers (D) der Strukturerhebungen (24) entspricht.

10. Verfahren nach einem der Ansprüche 1 bis 9, **dadurch gekennzeichnet, dass** die Anordnung der Strukturerhebungen (24) der Oberflächenstruktur an der Kühlwalzenoberfläche (22) einer im wesentlichen gleichmässigen Zufallsverteilung entspricht.

11. Verfahren nach einem der Ansprüche 1 bis 10, **dadurch gekennzeichnet, dass** das Trägermaterial (14) eine Aluminiumfolie und die Kunststoffschicht (13) eine peelbare Siegelschicht ist, und dass aus dem mit der Siegelschicht extrusionsbeschichteten Trägermaterial (14) Deckel zum Verschliessen von Behältern durch Siegelung hergestellt werden.
